# EUROPÄISCHE PATENTANMELDUNG

(11) **EP 1 968 149 A1**
(43) Veröffentlichungstag der Anmeldung: **10.09.2008**
(21) Anmeldenummer: 07004360.9
(22) Anmeldetag: 02.03.2007
(51) Int. Cl.: H01M 8/24, H01M 8/02

(54) **Brennstoffzelleneinheit**

(71) Anmelder: SIEMENS AKTIENGESELLSCHAFT, 80333 München (DE)
(72) Erfinder: Mattejat, Arno, Dr., 91056 Erlangen (DE)

(57) **Zusammenfassung**

Die Erfindung betrifft ein Brennstoffzelleneinheit (2, 28) mit einer Vielzahl von Brennstoffzellen (4), einem an den Brennstoffzellen (4) vorbei führenden Längskanal (6, 8, 30) zum Versorgen der Brennstoffzellen (4) mit Betriebsgas und Verbindungsdurchlässen (12, 14, 44, 46, 60), die den Längskanal (6, 8, 30) mit den Brennstoffzellen (4) verbinden.

Um ein möglichst gleiches elektrisches Verhalten der Brennstoffzellen zu erreichen, wird vorgeschlagen, dass die Verbindungsdurchlässe (12, 14, 44, 46, 60) in Abhängigkeit von ihrer Längsposition im Längskanal (6, 8, 30) mit unterschiedlichen Strömungswiderständen (R_{hydr,9}, R_{hydr,13}) ausgeführt sind.

## Beschreibung

Die Erfindung betrifft eine Brennstoffzelleneinheit mit einer Vielzahl von Brennstoffzellen, einem an den Brennstoffzellen vorbei führenden Längskanal zum Versorgen der Brennstoffzelle mit Betriebsgas und Verbindungsdurchlässen, die den Längskanal mit den Brennstoffzellen verbinden.

In einer Brennstoffzelle wird durch die Zusammenführung von Wasserstoff (H₂) und Sauerstoff (O₂) in einer elektrochemischen Reaktion elektrische Energie und Wärme erzeugt. Hierfür wird der Brennstoffzelle als Betriebsgas Wasserstoff und Sauerstoff entweder in reiner Form oder als Betriebsgas mit einem Wasserstoffanteil bzw. Sauerstoffanteil zugeführt. Durch die Verbindung von Wasserstoff und Sauerstoff an einen Elektrolyten der Brennstoffzelle entsteht Produktwasser, das - zusammen mit auskondensiertem Befeuchtungswasser - aus der Brennstoffzelle ausgetragen werden muss.

Damit eine Brennstoffzelle störungsfrei und effizient funktionieren kann, muss der Brennstoffzelle in ausreichender Menge Betriebsgas zugeführt werden, um das entstandene Wasser einwandfrei abführen zu können. Dies geschieht durch Ausblasen des Wassers aus der Brennstoffzelle, weshalb ihr mehr Betriebsgas zugeführt wird, als sie für die elektrochemische Reaktion benötigt, damit überschüssiges Betriebsgas zum Ausblasen zur Verfügung steht.

Durch die elektrochemische Reaktion entsteht in einer Brennstoffzelle eine elektrische Spannung von unter 1 Volt. Zum Erreichen einer hohen Leistung bei nicht zu hohem Stromfluss durch die Brennstoffzellen werden eine Vielzahl von Brennstoffzellen, beispielsweise 5, 10 oder noch mehr Brennstoffzellen, elektrisch seriell verschaltet und parallel mit den Betriebsgasen versorgt. Eine solche Brennstoffzellenanordnung ist beispielsweise aus der EP 0 591 800 B1 bekannt.

Zum Versorgen der Brennstoffzellen mit Betriebsgas ist eine Brennstoffzelleneinheit mit einem Längskanal versehen, der über Verbindungsdurchlässe mit den einzelnen Brennstoffzellen verbunden ist. Durch einen weiteren, ebenfalls mit Verbindungsdurchlässen mit den Brennstoffzellen verbundenen Längskanal kann das unverbrauchte Betriebsgas und das Wasser aus den Brennstoffzellen abgeführt werden.

Es ist eine Aufgabe der vorliegenden Erfindung, eine Brennstoffzelleneinheit anzugeben, mit der ein möglichst gleiches elektrisches Verhalten der Brennstoffzellen erreicht werden kann.

Diese Aufgabe wird gelöst durch eine Brennstoffzelleneinheit der eingangs genannten Art, bei der erfindungsgemäß die Verbindungsdurchlässe in Abhängigkeit von ihrer Längsposition im Längskanal mit unterschiedlichen Strömungswiderständen ausgeführt sind. Es kann einer unterschiedlichen Durchströmung der Brennstoffzellen mit Betriebsgas entgegengewirkt werden, wodurch ein zumindest weitgehend gleiches elektrisches Verhalten der Brennstoffzellen erzielbar ist.

Die Erfindung geht hierbei von der Überlegung aus, dass bei einer Brennstoffzelleneinheit mit einer Vielzahl von parallel mit Betriebsgas versorgten Zellen die Durchströmung der Zellen unterschiedlich sein kann, was zu unterschiedlichem elektrischen Verhalten führt. Ursache hierfür können aufbaubedingte Strömungswiderstände in den Strömungswegen des Betriebsgases zu und von den Brennstoffzellen sein. So kann beispielsweise durch das Abströmen des Betriebsgases aus dem Längskanal in die Brennstoffzellen im Verlauf der Länge des Längskanals die Strömungsgeschwindigkeit sinken und dementsprechend der statische Druck des Betriebsgases im Längskanal ansteigen, wie dies mit der Bernoulli-Gleichung dargestellt ist.

Im Längskanal, der das Betriebsgas wieder abführt, können die Verhältnisse umgekehrt sein. An dem Ende, an dem beispielsweise der Längskanal verschlossen ist, wird er nur von dem aus der ersten Brennstoffzelle austretenden Betriebsgas durchströmt, die Strömungsgeschwindigkeit ist also gering. Folgt man dem Kanal in Strömungsrichtung, so strömt aus den Brennstoffzellen immer mehr Betriebsgas zu, die Strömungsgeschwindigkeit im Längskanal steigt an und damit verringert sich der statische Druck über der Länge des Längskanals.

Der Volumenstrom durch eine Brennstoffzelle hängt vom aktuellen Laststrom und den Verhältnissen des statischen Drucks ab, die an ihr herrschen. Hier ist insbesondere der statische Druck am Betriebsgaseingang und am Betriebsgasausgang der Brennstoffzelle ausschlaggebend. Vergleicht man Brennstoffzellen bei konstantem elektrischem Strom, dann ist ihre Durchströmung abhängig davon, wie groß die statische Druckdifferenz an diesen Stellen ist. Bei hoher Druckdifferenz ist die Durchströmung und damit eine Spülrate zum Austrag von Wasser aus den Brennstoffzellen hoch, bei niedriger Druckdifferenz ist sie niedrig.

Bei einer langen Brennstoffzelleneinheit mit einem langen Längskanal mit vielen von ihm parallel versorgten Zellen werden somit die Spülraten der einzelnen Brennstoffzellen unterschiedlich sein. Die Spülraten, also die Effektivität des Wasseraustrags aus den Brennstoffzellen beeinflusst wiederum das elektrische Verhalten, weshalb unterschiedliche Spülraten zu einem unterschiedlichen elektrischen Verhalten und damit zu einer unterschiedlichen Belastung der Brennstoffzellen führen können, so dass die Lebensdauer der Brennstoffzellen unterschiedlich ist, was sich negativ auf das Betriebsverhalten der Brennstoffzelleneinheit auswirkt.

Durch die Konstruktion der Verbindungsdurchlässe der Art, dass sie mit unterschiedlichen Strömungswiderständen ausgeführt sind, kann eine gleichmäßige Durchströmung und damit eine gleichmäßige Spülrate bei allen Brennstoffzellen, die durch den Längskanal mit Betriebsgas versorgt werden, erreicht werden.

Der Längskanal ist zweckmäßigerweise ein gerader, durch die Brennstoffzelleneinheit führender Kanal. Er kann jedoch auch abgeknickt, gewunden oder in anderer Form durch die Brennstoffzelleneinheit geführt sein. Er ist vorteilhafterweise mittelbar oder unmittelbar an ein Betriebsgasversorgungsmittel, beispielsweise eine Pumpe oder einen Drucktank, angeschlossen und dient zu einer Betriebsgaszuführung zu den Brennstoffzellen oder zu einer Betriebsgasabführung aus den Brennstoffzellen. Wenn er zur Betriebsgasabführung dient, ist er zweckmäßigerweise mittelbar oder unmittelbar mit einem Wasserabscheider verbunden, zum Trennen von Wasser vom Betriebsgas.

Als Brennstoffzelleneinheit kann ein eigenständiges Brennstoffzellensystems oder beispielsweise eine Kaskadenstufe eines Brennstoffzellensystems mit mehreren Kaskadenstufen gesehen werden. Die Erfindung kann sowohl im sauerstoffseitigen Betriebsgasstrom als auch im wasserstoffhaltigen Betriebsgasstrom gleichermaßen angewendet werden.

Die Strömungswiderstände der Verbindungsdurchlässe sind in ihrer Gesamtheit vorteilhafterweise so eingestellt, dass sie in Betrieb einer Wirkung eines statischen Druckgefälles im Längskanal, insbesondere zwischen beiden Längskanälen, in den Brennstoffzellen entgegenwirken. Hierdurch kann eine durch das Druckgefälle hervorgerufene unterschiedliche Durchströmung zweier Brennstoffzellen vergleichmäßigt werden, so dass diese beiden, an unterschiedlichen Stellen des Längskanals angeordneten Brennstoffzellen möglichst beide gleich durchströmt werden. Der Betrieb kann ein Normalbetrieb, beispielsweise ein Betrieb bei Nennlast der Brennstoffzelleneinheit sein.

In einer vorteilhaften Ausgestaltung der Erfindung umfasst die Brennstoffzelleneinheit einen weiteren, also zweiten durch Verbindungsdurchlässe mit den Brennstoffzellen verbundenen Längskanal, wobei die Strömungswiderstände in Längsrichtung der Längskanäle proportional zu statischen Druckdifferenzen zwischen den Längskanälen eingestellt sind. Einer durch unterschiedliche statische Druckdifferenzen bewirkten unterschiedlichen Durchströmung der Brennstoffzellen und einer hierdurch bewirkten unterschiedlichen Spülrate der Brennstoffzellen kann entgegengewirkt werden. Eine statische Druckdifferenz zwischen den Längskanälen ist hierbei der Unterschied zwischen einem statischen Druck des einen Längskanals am Eingang eines Verbindungsdurchlasses zu einer Brennstoffzelle zum statischen Druck des anderen Längskanals am Eingang eines Verbindungsdurchlasses von diesem Längskanal zu der gleichen Brennstoffzelle. Die Eingänge beziehen sich hierbei auf die Mündungen der Verbindungsdurchlässe in die Längskanäle.

Sind die Strömungswiderstände so eingestellt, dass im Betrieb die statischen Druckdifferenzen in den mit dem Längskanal verbundenen Brennstoffzellen zumindest im Wesentlichen gleich sind, so kann eine in jeder Brennstoffzelle gleiche Durchströmung und damit ein hochgradig gleiches elektrisches Verhalten der Brennstoffzelle erreicht werden. Der Betrieb ist hierbei ein Normalbetrieb, beispielsweise ein Betrieb bei Nennlast der Brennstoffzelleneinheit.

Vorteilhafterweise sind die Verbindungsdurchlässe so ausgeführt, dass die Strömungswiderstände über die Länge des Längskanals in Strömungsrichtung kontinuierlich zunehmen. Hierdurch kann einem in Längsrichtung des Längskanals kontinuierlich ansteigenden statischen Druck während des Betriebs der Brennstoffzelleneinheit Rechnung getragen werden, was insbesondere bei einer Z-förmigen Betriebsgasführung durch die Brennstoffzelleneinheit vorteilhaft ist. Durch die Diskretheit der Verbindungsdurchlässe ist die Kontinuität auch bei einer gestuft kontinuierlichen Zunahme gegeben. Ein kontinuierliches Zunehmen ist gegeben, wenn ein Strömungswiderstand eines Verbindungsdurchlasses stets gleich oder größer ist als der Strömungswiderstand des vorhergehenden Verbindungsdurchlasses, wobei zumindest ein Strömungswiderstand eines Verbindungsdurchlasses größer sein muss als ein Strömungswiderstand eines vorhergehenden Verbindungsdurchlasses.

In einer alternativen Ausführungsform nehmen die Strömungswiderstände über die Länge des Längskanals in Strömungsrichtung erst ab und dann wieder zu. Diese Variante ist besonders vorteilhaft bei einer U-förmigen Strömungsführung des Betriebsgases durch die Brennstoffzelleneinheit. Durch die Diskretheit der Verbindungsdurchlässe ist auch hier die Kontinuität auch bei einer gestuft kontinuierlichen Ab- und Zunahme gegeben.

Eine andere vorteilhafte Anwendung der Erfindung kann dadurch realisiert werden, dass die maximal vier ersten und/oder letzten Verbindungsdurchlässe mit einem Strömungswiderstand ausgeführt sind, der höchstens das 0,7-fache des Strömungswiderstands eine hinsichtlich des Längskanals mittigen Verbindungsdurchlasses beträgt. Enthält beispielsweise das in den Längskanal einströmende Betriebsgas Tröpfchen, so wird in die ersten Brennstoffzellen entlang des Längskanals bereits Wasser eingetragen. Um dieses Wasser störungsfrei in die Brennstoffzellen und auch wieder heraus transportieren zu können, ist es vorteilhaft, wenn die zu ihr führenden Verbindungsdurchlässe weit geöffnet sind, also einen geringen Strömungswiderstand aufweisen.

Bei den letzten Brennstoffzellen entlang des Längskanals kann es vorkommen, dass sich dort Verschmutzung sammelt, beispielsweise Kohlefasern aus den Brennstoffzellen. Um diese störungsfrei aus den Brennstoffzellen transportieren zu können, ist es ebenfalls vorteilhaft, wenn die ausgangsseitig zu ihr führenden Verbindungsdurchlässe weit geöffnet sind, also einen geringen Strömungswiderstand aufweisen. Um einen vorteilhaft hohen Druck in den übrigen, insbesondere mittigen Brennstoffzellen aufbauen zu können, sind die Verbindungskanäle zu diesen vorteilhafterweise mit einem höheren Strömungswiderstand versehen.

In einer weiteren Ausgestaltung der Erfindung wird vorgeschlagen, dass die mit unterschiedlichen Strömungswiderständen ausgeführten Verbindungsdurchlässe Gasabführungen aus den Brennstoffzellen sind. Es kann ein großer statischer Druck in den Brennstoffzellen und hierdurch ein effektiver Betrieb der Brennstoffzelleneinheit erreicht werden. Dies gilt insbesondere dann, wenn die unterschiedlichen Strömungswiderstände stets größer sind als die Strömungswiderstände der jeweiligen Gaszuführungen zu den Brennstoffzellen, die insbesondere möglichst gleich ausgeführt sind. Ein besonders hoher statischer Druckaufbau in den Brennstoffzellen wird ermöglicht, wenn die Verbindungsdurchlässe einen niedrigen Strömungswiderstand aufweisen, insbesondere durch einen weitest möglichen Strömungsquerschnitt, also einen kontinuierlichen Strömungsquerschnitt ohne eine Verengung.

In einer anderen Ausführungsform sind die mit unterschiedlichen Strömungswiderständen ausgeführten Verbindungsdurchlässe Gaszuführungen zu den Brennstoffzellen. Der statische Druckausgleich kann hierbei durch die Gaszuführungen eingestellt werden, wobei die Gasabführungen auf eine gute Wasserabfuhr optimiert werden können, beispielsweise alle mit gleichmäßigem Strömungswiderstand und insbesondere mit einem großen Strömungsquerschnitt versehen sind.

Besonders vorteilhaft findet die Erfindung Anwendung bei einer als Brennstoffzellenblock ausgeführten Brennstoffzelleneinheit, bei dem die Brennstoffzellen zu einem Block zusammengeführt sind, der Längskanal ein Axialkanal, insbesondere in Stapelrichtung des Blocks, ist und die Verbindungsdurchlässe einen oder mehrere Radialkanäle umfassen. Die insbesondere bei einem langen Brennstoffzellenblock auftretende große Unterschiedlichkeit des Volumenstroms durch die Brennstoffzellen entlang des Längskanals kann ausgeglichen werden.

In einer weiteren Ausgestaltung der Erfindung ist die Einstellung der Strömungswiderstände durch eine den Kanalquerschnitt verengende Strömungsdrossel hergestellt. Die Beeinflussung des Volumenstroms durch eine Brennstoffzelle durch die Einstellung des Strömungswiderstands durch den betreffenden Verbindungsdurchlass kann einfach und mit standardisierten Bauteilen erreicht werden, beispielsweise indem standardisierte Kanäle unterschiedlich weit geöffnet werden. Die Anzahl der Kanäle pro Verbindungsdurchlass kann hierbei gleich bleiben, wobei die Strömungsdrossel je nach Einstellung die unterschiedlichen Strömungswiderstände bewirkt.

Eine einfache Realisierung unterschiedlicher Strömungswiderstände bzw. einer Strömungsdrossel kann so ausgeführt werden, dass die Verbindungsdurchlässe jeweils eine Anzahl von parallel geschalteten Kanälen aufweisen und die Einstellung der Strömungswiderstände durch eine unterschiedliche Anzahl geöffneter Kanäle hergestellt ist. Auch hierbei kann auf standardisierte Bauteile zurückgegriffen werden, beispielsweise indem nur eine gewünschte Anzahl von Kanälen aus einer standardisierten Anzahl von Kanälen pro Verbindungsdurchlass geöffnet wird. Als Strömungsdrossel kann auch ein geschlossener unter weiteren geöffneten Kanälen eines Verbindungsdurchlasses verstanden werden.

Eine zuverlässig wirkende Strömungsdrossel kann einfach hergestellt werden, wenn die Strömungsdrossel eine Öffnung am Ende des Kanals ist. Dieses Ende ist zweckmäßigerweise das zellenseitige Ende des Kanals. Die Strömungsdrossel bildet vorteilhafterweise die engste Stelle des Kanals.

Insbesondere bei einem Brennstoffzellenstapel ist es vorteilhaft, wenn der Kanal durch eine Formgebung zumindest eines Plattenbauteils gebildet ist und die Strömungsdrossel eine Öffnung im Plattenbauteil ist. Auf ein zusätzliches kanalbildendes Bauteil kann verzichtet werden. Das Plattenbauteil kann eine bipolare Platte oder eine Platte einer Kühlkarte zum Kühlen der Brennstoffzelle sein.

Die Herstellung der Brennstoffzelleneinheit kann noch weiter vereinfacht werden, wenn der Kanal durch eine Prägung zumindest eines Blechs gebildet ist und die Strömungsdrossel eine Öffnung im Blech ist.

Die Erfindung wird anhand von Ausführungsbeispielen näher erläutert, die in den Zeichnungen dargestellt sind. Es zeigen:
- FIG 1: einen Schnitt durch einen Brennstoffzellenblock mit einer Betriebsgasführung in U-Form,
- FIG 2: einen weiteren Brennstoffzellenblock mit einer Z-förmigen Betriebsgasführung,
- FIG 3: statische Drücke in Axialkanälen im Betrieb der Brennstoffzellenblöcke,
- FIG 4: ein Diagramm zum Volumenstrom von Betriebsgas durch Brennstoffzellen der Brennstoffzellenblöcke, aufgetragen gegen die Stapelrichtung X,
- FIG 5: einen Schnitt durch eine Brennstoffzelle entlang einer Betriebsgaszuführung,
- FIG 6: eine schematische Draufsicht auf die Betriebsgaszuführung,
- FIG 7 bis 9: unterschiedlich weit geöffnete Verbindungsdurchlässe bei Gaszuführungen zu Brennstoffzellen,
- FIG 10: ein Diagramm zu Strömungswiderständen von Verbindungsdurchlässen in Abhängigkeit von ihrer Position in Stapelrichtung X,
- FIG 11: eine schematische Darstellung von unterschiedlich weit geöffneten Gaszu- und Gasabführungen zu mehreren Brennstoffzellen, und
- FIG 12: eine alternative Anordnung von unterschiedlich weit geöffneten Gaszu- und Gasabführungen.

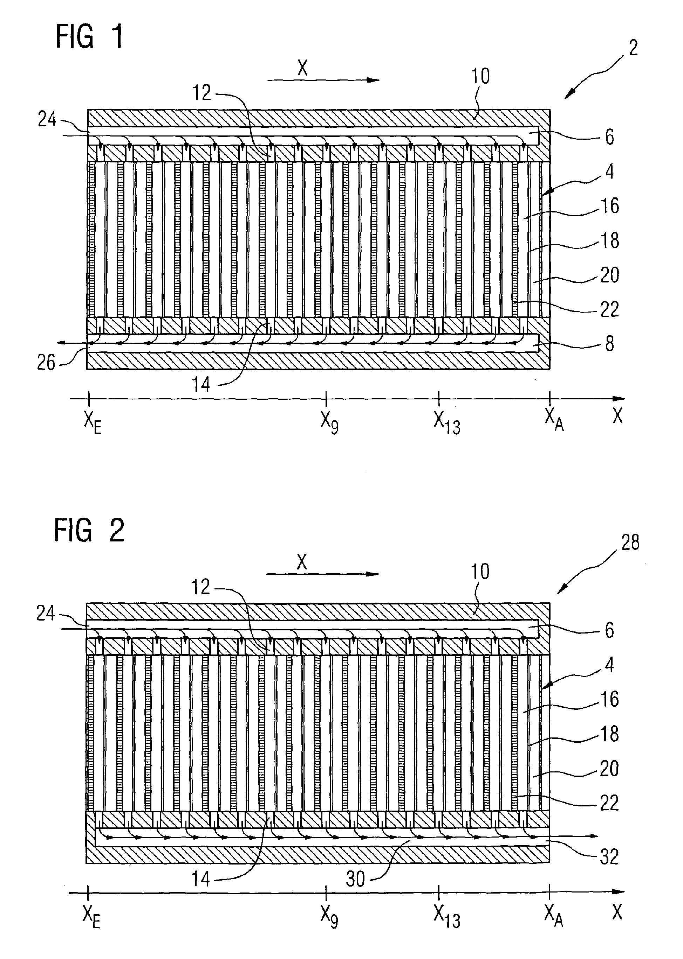

FIG 1 zeigt eine schematische Schnittansicht durch eine Brennstoffzelleneinheit 2, die als ein Brennstoffzellenblock rechteckigen Querschnitts mit einer Vielzahl von hintereinander gestapelten Brennstoffzellen 4 ausgeführt ist. In der Schnittebene verlaufend dargestellt sind zwei Längskanäle 6, 8, die - wie eine Mehrzahl weiterer Längskanäle der Brennstoffzelleneinheit 2 auch - durch Ausnehmungen durch eine Vielzahl von Plattenrändern 10 ausgeführt sind, die der Übersichtlichkeit halber als jeweils ein durchgehender Block gezeichnet sind. Beide Längskanäle 6, 8 sind in Stapelrichtung X geführte sackförmige Axialkanäle des Brennstoffzellenblocks, die durch als Radialkanäle ausgeführte Verbindungsdurchlässe 12, 14 jeweils mit dem Kathodengasraum 16 einer Brennstoffzelle 4 verbunden ist.

Die Kathodengasräume 16 der Brennstoffzellen 4 sind jeweils durch Membran-Elektrolyt-Einheiten 18 vom jeweiligen Anodengasraum 20 der Brennstoffzellen 4 getrennt. Zwischen einem Anodengasraum 20 einer Brennstoffzelle 4 und dem Kathodengasraum 16 einer benachbarten Brennstoffzelle 4 ist jeweils eine Bipolarplatte 22 angeordnet. Analog zu den Kathodengasräumen 16 sind auch die Anodengasräume 20 der Brennstoffzellen 4 mit nicht dargestellten Längskanälen verbunden, so dass die Brennstoffzelleneinheit 2 eine Vielzahl von Längskanälen 6, 8 aufweist, von denen in FIG 1 der Übersichtlichkeit halber nur zwei Längskanäle 6, 8 dargestellt sind.

Der obere Längskanal 6 dient als Gaszuführung zum Zuführen von sauerstoffhaltigem Betriebsgas, beispielsweise reiner Sauerstoff oder Luft, zu den Brennstoffzellen 4. Der untere Längskanal 8 dient als Gasabführung zum Abführen von in den Brennstoffzellen 4 unverbrauchtem Betriebsgas und von Produktwasser und auskondensiertem Befeuchtungswasser aus der Brennstoffzelleneinheit 2. Auf diese Weise wird das Betriebsgas U-förmig durch die Brennstoffzelleneinheit 2 von einem Betriebsgaseinlass 24 zu einem Betriebsgasauslass 26 geführt.

FIG 2 zeigt eine Brennstoffzelleneinheit 28, die bis auf die Z-förmige Betriebsgasführung gleich aufgebaut ist wie die Brennstoffzelleneinheit 2, so dass bezüglich gleich bleibender Bauteile und Funktionen auf die Beschreibung zu FIG 1 verwiesen wird. Gleichbleibende Bauteile sind mit den gleichen Bezugszeichen versehen. Das Betriebsgas durchströmt die Brennstoffzelleneinheit 28, die beispielsweise als eine Kaskadenstufe von mehreren Kaskadenstufen einer Brennstoffzellenanlage dient, vom Betriebsgaseinlass 24 an einem Einlassort x_{E} durch den Längskanal 6, die Verbindungsdurchlässe 12 zu den Kathodengasräumen 16, von dort durch die Verbindungsdurchlässe 14 in einen Längskanal 30 und dort ebenfalls in Stapelrichtung X zu einem Betriebsgasauslass 32 an einem Ausgangsort x_{A}, so dass eine Z-förmige Durchströmung der Brennstoffzelleneinheit 28 gegeben ist.

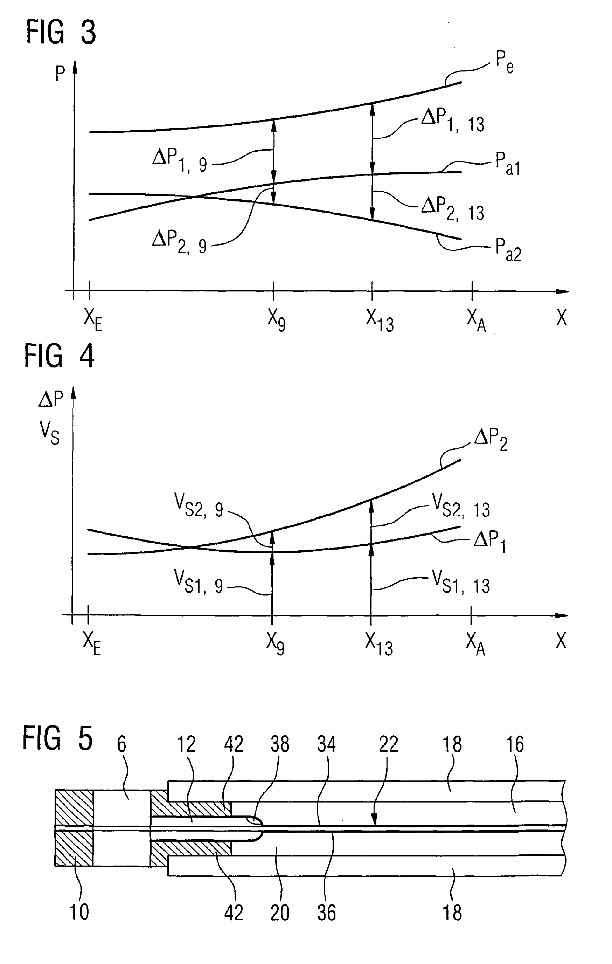

Bei beiden Brennstoffzelleneinheiten 2, 28 strömt das Betriebsgas mit einer bestimmten Geschwindigkeit durch den Betriebsgaseinlass 24 in den Längskanal 6. Je mehr von diesem Betriebsgas in die 16 dargestellten Brennstoffzellen 4 einströmt, desto langsamer wird der Betriebsgasstrom im weiteren Verlauf des Längskanals 6 in Stapelrichtung X. Nach dem durch die bekannte Bernoulli-Gleichung gegebenen Gesetz erhöht sich hierdurch der statische Druck P im Längskanal 6 im Verlauf der Stapelrichtung X. Die Abhängigkeit des statischen Drucks P im Längskanal 6 in Abhängigkeit von der Raumkoordinate x ist in FIG 3 dargestellt.

FIG 3 zeigt den Verlauf der statischen Drücke Pₑ im Längskanal 6, Pₐ₁ im Längskanal 8 und Pₐ₂ im Längskanal 30 über die Raumkoordinate x parallel zur Stapelrichtung X. Im Längskanal 6 nimmt der statische Druck Pₑ vom Eingangsort x_{E} am Betriebsgaseinlass 24 bis zu seinem Sackende kontinuierlich zu. Im Längskanal 8 wird das ausströmende Betriebsgas im Verlauf seines Wegs durch den Längskanal 8 mit immer mehr Betriebsgas aus den Brennstoffzellen 4 vereint, so dass der Betriebsgasstrom im Längskanal 8 vom Sackende des Längskanals 8 in Richtung zum Betriebsgasauslass stetig beschleunigt wird. Hierdurch sinkt der statische Druck Pₐ₁ entgegen der Stapelrichtung X kontinuierlich. Durch die entgegengesetzte Strömungsrichtung im Längskanal 30 sinkt der statische Druck Pₐ₂ im Längskanal vom Sackende in Richtung zum Ausgangsort x_{A} am Betriebsgasauslass 32 kontinuierlich ab, wie dies in FIG 3 anhand der untersten Kurve dargestellt ist.

Der Volumenstrom V_{S} von Betriebsgas durch eine Brennstoffzelle 4, im obigen Beispiel von sauerstoffhaltigem Betriebsgas durch den Kathodengasraum 16, ist abhängig von der Differenz der statischen Drücke in den beiden Längskanälen 6, 8 bzw. 6, 30. Dies ist in FIG 3 beispielhaft dargestellt für die dreizehnte Brennstoffzelle am Ort x₁₃. Die statische Druckdifferenz ΔP_{1,13} an der dreizehnten Brennstoffzelle 4, die zwischen den beiden Längskanälen 6, 8 im Beispiel aus FIG 1 und deren Verbindungsdurchlässe 12, 14 anliegt, ist in FIG 3 durch einen Doppelpfeil dargestellt. Diese Druckdifferenz ΔP_{1,13} ist etwas größer als die Druckdifferenz ΔP_{1,9} der neunten Brennstoffzelle 4 am Ort x₉.

Noch größer ist der Unterschied bei dem in FIG 2 gezeigten Beispiel. Hier ist die Druckdifferenz ΔP_{2,13} erheblich größer als die Druckdifferenz ΔP_{2,9} der neunten Brennstoffzelle. Dementsprechend werden die beiden Brennstoffzellen 4 unterschiedlich stark von Betriebsgas durchströmt.

Die Volumenströme Vₛ, mit denen das Betriebsgas durch die Brennstoffzellen 4 strömt, sind im Diagramm aus FIG 4 dargestellt. Es sind darin aufgetragen die statischen Druckdifferenzen ΔP₁, ΔP₂ in Abhängigkeit von der Raumkoordinate x, also vom Ort innerhalb der Längskanäle 6, 8, 30. Da der Volumenstrom Vₛ proportional zu den statischen Druckdifferenzen ΔP ist, sind die unterschiedlichen Volumenströme V_{S1,9}, V_{S2,9} für die neunte und V_{S1,13}, V_{S2,13} für die dreizehnte Brennstoffzelle 4 exemplarisch jeweils als Pfeil eingetragen. Hierbei ist insbesondere der Volumenstrom V_{S2,13} dreizehnten Brennstoffzelle 4 erheblich größer als der Volumenstrom V_{S2,9} der neunten Brennstoffzelle 4. Dementsprechend unterschiedlich werden diese beiden Brennstoffzellen 4 durchströmt, was zu einem unterschiedlichen elektrischen Verhalten der Brennstoffzelle 4 führt, beispielsweise durch einen verschiedenen Austrag von Wasser aus den Brennstoffzellen 4 oder eine unterschiedliche Belegung der jeweiligen Membran-Elektrolyt-Einheit 18 mit dem Betriebsgas.

Zum Ausgleich dieser unterschiedlichen Volumenströme V_{S} sind die Verbindungsdurchlässe 12, 14 mit einem in Abhängigkeit von ihrer Längsposition in den Längskanälen 6, 8, 30 unterschiedlichen Strömungswiderständen ausgeführt. Eine Seitenansicht eines Verbindungsdurchlasses 12 bzw. 14 ist in FIG 5 dargestellt. Der Verbindungsdurchlass 12 ist durch eine Prägung eines Blechs 34 der Bipolarplatte 22 gebildet, wobei die Prägung in Längsrichtung des Verbindungsdurchlasses 12, also in Radialrichtung, als eine längliche U-förmige Vertiefung gebildet ist. Hierdurch kann Betriebsgas aus dem Längskanal 6 innerhalb des Verbindungsdurchlasses 12 zwischen die beiden Bleche 34, 36 der Bipolarplatte 22 und weiter durch eine Öffnung 38 in den Kathodengasraum 16 treten. Die Öffnung 38 im Verbindungsdurchlass 12 ist ein Loch im Blech 34 am Ende des Verbindungsdurchlasses 12.

In analoger Weise ist der Verbindungsdurchlass 14 zwischen dem Kathodengasraum 16 und dem Längskanal 8 oder dem Längskanal 30 ausgebildet, so dass eine durchgängige Verbindung zwischen den Längskanälen 6, 8 bzw. 6, 30 gebildet ist.

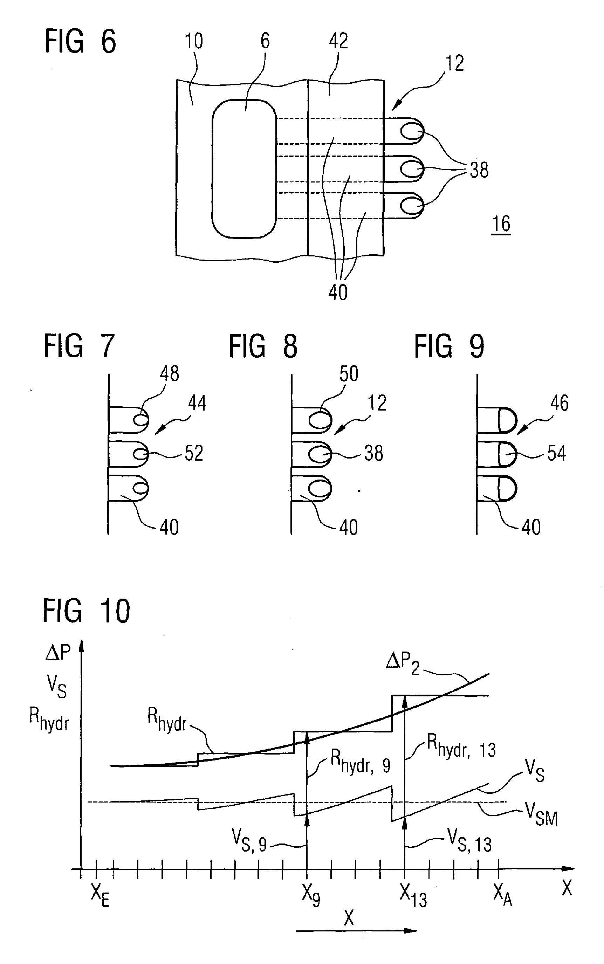

Eine Draufsicht auf den Verbindungsdurchlass 12 bei entfernter Membran-Elektrolyt-Einheit 18 ist in FIG 6 dargestellt. Der Verbindungsdurchlass 12 umfasst drei separate Kanäle 40, die im Bereich des Kathodengasraums 16 aus einer Dichtung 42 hervortreten. Alle drei Kanäle 40 sind zum Kathodengasraum 16 durch jeweils eine Öffnung 38 geöffnet.

In den FIG 7 bis 9 sind drei verschiedene Verbindungsdurchlässe 12, 44, 46 schematisch dargestellt mit jeweils drei Kanälen 40. Je nachdem wie weit die Kanäle 40 geöffnet sind, bilden die Enden der Kanäle 40 eine den Strömungsquerschnitt verengende Strömungsdrossel 48, 50. Hierbei sind die Kanäle 40 des Verbindungsdurchlasses 44 mit nur kleinen Öffnungen 52 versehen, so dass der Strömungsquerschnitt dort sehr eng ist und die Strömungsdrossel 48 dementsprechend einen hohen Strömungswiderstand erzeugt. Die Öffnungen 38 sind weiter als die Öffnungen 52, so dass die Strömungsdrossel 50 einen kleineren Strömungswiderstand erzeugt. Öffnungen 54 der Kanäle 40 des Verbindungsdurchlasses 46 sind maximal weit geöffnet, indem die gesamte vordere Kappe der kanalförmigen Prägung des Blechs 34 entfernt wurde. Die Kanäle 40 sind vollständig und ohne eine Strömungsquerschnittsverengung geöffnet, so dass der Verbindungsdurchlass 46 keine Strömungsdrossel aufweist.

In FIG 10 ist dargestellt, wie die Strömungswiderstände der Verbindungsdurchlässe 12, 14, 44, 46 durch unterschiedlich weit geöffnete Kanäle 40 in Längsrichtung bzw. Stapelrichtung X der Längskanäle 6, 30 proportional zu statischen Druckdifferenzen ΔP₂ zwischen den Längskanälen 6, 30 eingestellt ist. So sind beispielsweise die ersten vier Brennstoffzellen 4 mit Verbindungsdurchlässen 46 mit einer maximal großen Öffnung 54 versehen. Die vier anschließenden Brennstoffzellen 4 weisen jeweils Verbindungsdurchlässe 12 mit recht großen Öffnungen 38 auf. Nachfolgende Brennstoffzellen 4 haben Verbindungsdurchlässe mit etwas kleineren Öffnungen, und die letzten vier Brennstoffzellen 4 werden durch kleine Öffnungen 52 mit Betriebsgas versorgt.

Auf diese Weise sind die Strömungswiderstände entlang dem Längskanal 30 bzw. in Stapelrichtung X gestuft kontinuierlich eingestellt, wie das am Beispiel der Strömungswiderstände R_{hydr,9} und R_{hydr,13} der Verbindungsdurchlässe 14 der neunten und dreizehnten Brennstoffzelle 4 dargestellt ist. Gestuft ist der Verlauf des Strömungswiderstands R_{hydr} durch die drei vorhandenen Stufen und kontinuierlich durch ein stetiges Ansteigen des Strömungswiderstands R_{hydr} im Verlauf des Längskanals 30 bzw. in Stapelrichtung X. Auf diese Weise können die ansonsten unterschiedlichen Volumenströme V_{S2,9} und V_{S2,13} vergleichmäßigt werden, so dass durch die neunte und dreizehnte Brennstoffzelle 4 der gleiche Volumenstrom V_{S,9}, V_{S,13} an Betriebsgas tritt.

Der Verlauf des Volumenstroms Vₛ längs des Längskanals 30 bzw. in Stapelrichtung X ist in FIG 10 dargestellt und verläuft leicht schwankend um einen Mittelwert V_{SM}. Selbstverständlich ist auch eine feinere Stufung der Größen der Öffnungen 38, 52, 54 denkbar, so dass die Schwankungen des Volumenstroms V_{S} um den Mittelwert V_{SM} kleiner ausfallen.

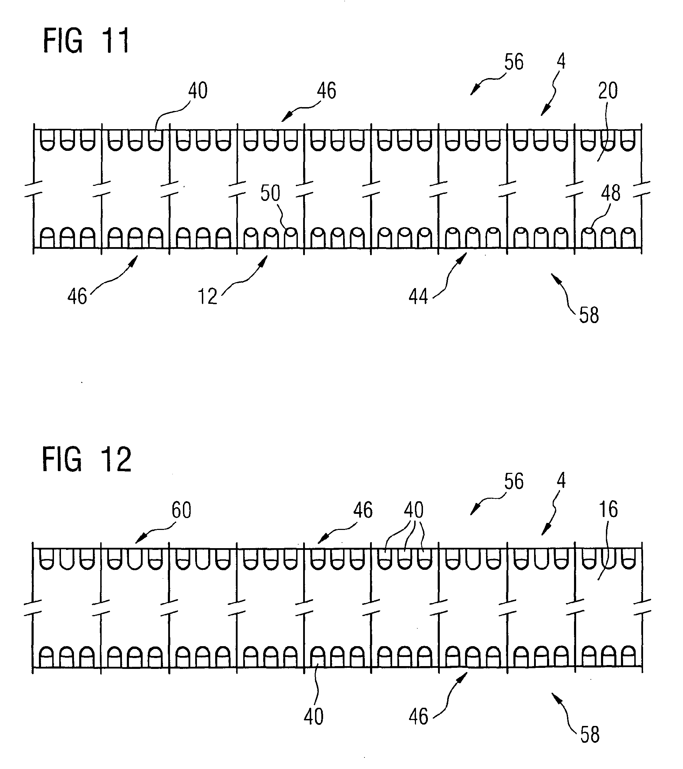

In FIG 11 ist in einer schematisch dargestellten Anordnung von neun Anodengasräumen 20 von neun Brennstoffzellen 4 beispielhaft eine Verteilung der Strömungswiderstände auf eine Gaszufuhr 56 und eine Gasabfuhr 58 dargestellt. Auf Seiten der Gaszufuhr 56 sind lediglich Verbindungsdurchlässe 46 ohne den Strömungswiderstand regulierende Strömungsdrosseln angeordnet. Hierdurch kann das Betriebsgas mit beispielsweise geringst möglichem Druckverlust in die Anodengasräume 20 einströmen. Auch die Gasabfuhr 58 hingegen ist mit unterschiedlichen Verbindungsdurchlässen 12, 44, 46 ausgerüstet, so dass hier der Strömungswiderstand entsprechend den statischen Druckverhältnissen in den Längskanälen 6, 8, 30 beeinflusst wird, so dass durch alle Anodengasräume 20 ein im Wesentlichen gleicher Volumenstrom von Betriebsgas strömt. Durch diese vorteilhafte Anordnung der Strömungsdrosseln 48, 50, zumindest überwiegend auf der Gasabfuhrseite 58, kann ein hoher Betriebsgasdruck in den Anodengasräumen 20 aufgebaut werden.

FIG 12 zeigt eine alternative Anordnung, die besonders vorteilhaft für einen zuverlässigen Wasseraustrag aus beispielsweise den Kathodengasräumen 16 von Brennstoffzellen 4 ist. Auf Seiten der Gaszufuhr 56 liegen zwei Arten von Verbindungsdurchlässen 46, 60 zum Ausgleich beispielsweise der Druckdifferenz ΔP₂, wie in FIG 4 gezeigt. Die in Längsrichtung mittleren Brennstoffzellen 4 werden hierbei durch die Verbindungsdurchlässe 46 ohne Strömungsdrossel mit Betriebsgas versorgt. Die Brennstoffzellen 4 an den beiden Enden des Längskanals 6 werden durch die Verbindungsdurchlässe 60 mit Betriebsgas versorgt, bei denen jeweils einer von mehreren Kanälen 40 verschlossen ist. Auf diese Weise wird der Strömungswiderstand durch die Anzahl der geöffneten Kanäle 40 eingestellt. Gasabfuhrseitig sind alle Kanäle 40 geöffnet, so dass Produktwasser gut aus den Kathodengasräumen 16 abtransportiert wird.

Die Strömungswiderstände sind in den vorangehend beschriebenen Ausführungsbeispielen so eingestellt, dass sie eine Druckdifferenz ΔP an jeweils gegenüber liegenden Orten ausgleichen, so dass ein Volumenstrom V_{S} von Betriebsgas durch die Brennstoffzellen 4 entlang der Längskanäle 6, 8, 30 zumindest im Wesentlichen gleichmäßig, z.B. gestuft gleichmäßig ist. Dieser Zustand ist bei einem Betrieb der Brennstoffzelleneinheit 2 bei ihrer Nennlast gegeben. Eine Anpassung der Einstellungen, insbesondere hinsichtlich anderer Lastzustände der Brennstoffzelleneinheit 2, ist nach dem gleichen Prinzip herstellbar.

Analog zu den Ausführungsbeispielen aus den FIGen 11 und 12 können die ersten und/oder letzten Verbindungsdurchlässe, insbesondere der Gasabfuhr 58, besonders weit geöffnet sein, insbesondere so dass ihr Strömungswiderstand maximal das 0,7-fache, insbesondere nur das 0,6-fache des Strömungswiderstands der mittleren Verbindungsdurchlässe 46 aufweist. Wasser und Verschmutzungen können so störungsfrei aus den ersten bzw. letzten Brennstoffzellen 4 ausgetragen werden.

## Patentansprüche

1. Brennstoffzelleneinheit (2, 28) mit einer Vielzahl von Brennstoffzellen (4), einem an den Brennstoffzellen (4) vorbei führenden Längskanal (6, 8, 30) zum Versorgen der Brennstoffzellen (4) mit Betriebsgas und Verbindungsdurchlässen (12, 14, 44, 46, 60), die den Längskanal (6, 8, 30) mit den Brennstoffzellen (4) verbinden,
**dadurch gekennzeichnet, dass** die Verbindungsdurchlässe (12, 14, 44, 46, 60) in Abhängigkeit von ihrer Längsposition im Längskanal (6, 8, 30) mit unterschiedlichen Strömungswiderständen (R_{hydr,9}, R_{hydr,13}) ausgeführt sind.

2. Brennstoffzelleneinheit (2, 28) nach Anspruch 1,
**gekennzeichnet durch** einen weiteren **durch** Verbindungsdurchlässe (12, 14, 44, 46, 60) mit den Brennstoffzellen (4) verbundenen Längskanal (6, 8, 30), wobei die Strömungswiderstände (R_{hydr,9}, R_{hydr,13}) proportional zu statischen Druckdifferenzen (ΔP_{1,9}, ΔP_{1,13}, ΔP_{2,9}, ΔP_{2,13}) zwischen den Längskanälen (6, 8, 30) eingestellt sind.

3. Brennstoffzelleneinheit (2, 28) nach Anspruch 1 oder 2,
**dadurch gekennzeichnet, dass** die Strömungswiderstände (R_{hydr,9}, R_{hydr,13}) so eingestellt sind, dass im Betrieb die statischen Druckdifferenzen in den mit dem Längskanal (6, 8, 30) verbundenen Brennstoffzellen zumindest im Wesentlichen gleich sind.

4. Brennstoffzelleneinheit (2) nach einem der vorhergehenden Ansprüche,
**dadurch gekennzeichnet, dass** die Strömungswiderstände (R_{hydr,9}, R_{hydr,13}) über die Länge des Längskanals (6, 8) in Strömungsrichtung kontinuierlich zunehmen.

5. Brennstoffzelleneinheit (28) nach einem der Ansprüche 1 bis 3,
**dadurch gekennzeichnet, dass** die Strömungswiderstände über die Länge des Längskanals (6, 30) in Strömungsrichtung erst kontinuierlich abnehmen und dann wieder zunehmen.

6. Brennstoffzelleneinheit (2, 28) nach einem der vorhergehenden Ansprüche,
**dadurch gekennzeichnet, dass** die maximal vier ersten und/oder letzten Verbindungsdurchlässe mit einem Strömungswiderstand (R_{hydr}) ausgeführt sind, der höchstens das 0,7-fache des Strömungswiderstands (R_{hydr}) eine hinsichtlich des Längskanals (6, 8, 30) mittigen Verbindungsdurchlasses (12, 14, 44, 46, 60) beträgt.

7. Brennstoffzelleneinheit (2, 28) nach einem der vorhergehenden Ansprüche,
**dadurch gekennzeichnet, dass** die mit unterschiedlichen Strömungswiderständen (R_{hydr,9}, R_{hydr,13}) ausgeführten Verbindungsdurchlässe (14, 44, 46, 60) Gasabführungen (56) aus den Brennstoffzellen (4) sind.

8. Brennstoffzelleneinheit (2, 28) nach Anspruch 7,
**dadurch gekennzeichnet, dass** als Gaszuführungen (58) ausgeführte Verbindungsdurchlässe (12, 46) über die Länge des Längskanals (6, 8, 30) mit gleichem Strömungswiderstand ausgeführt sind.

9. Brennstoffzelleneinheit (2, 28) nach einem der vorhergehenden Ansprüche,
**dadurch gekennzeichnet, dass** die mit unterschiedlichen Strömungswiderständen (R_{hydr,9}, R_{hydr,13}) ausgeführten Verbindungsdurchlässe (12, 44, 46, 60) Gaszuführungen (58) zu den Brennstoffzellen (4) sind.

10. Brennstoffzelleneinheit (2, 28) nach einem der vorhergehenden Ansprüche,
**dadurch gekennzeichnet, dass** die Brennstoffzellen (4) zu einem Block zusammengefügt sind, der Längskanal (6, 8, 30) ein Axialkanal ist und die Verbindungsdurchlässe (12, 14, 44, 46, 60) einen oder mehrere Radialkanäle umfassen.

11. Brennstoffzelleneinheit (2, 28) nach einem der vorhergehenden Ansprüche,
**dadurch gekennzeichnet, dass** die Verbindungsdurchlässe (12, 14, 60) jeweils eine Anzahl von parallel geschalteten Kanälen (40) aufweisen und die Einstellung der Strömungswiderstände (R_{hydr,9}, R_{hydr,13}) durch eine unterschiedliche Anzahl geöffneter Kanäle (40) hergestellt ist.

12. Brennstoffzelleneinheit (2, 28) nach einem der vorhergehenden Ansprüche,
**dadurch gekennzeichnet, dass** die Einstellung der Strömungswiderstände (R_{hydr,9}, R_{hydr,13}) durch eine den Kanalquerschnitt verengende Strömungsdrossel (48, 50) hergestellt ist.

13. Brennstoffzelleneinheit (2, 28) nach Anspruch 12,
**dadurch gekennzeichnet, dass** die Strömungsdrossel (48, 50) eine Öffnung (38, 52, 54) am Ende des Kanals (40) ist.

14. Brennstoffzelleneinheit (2, 28) nach Anspruch 12 oder 13,
**dadurch gekennzeichnet, dass** der Kanal (40) durch eine Formgebung zumindest eines Plattenbauteils gebildet ist und die Strömungsdrossel (48, 50) eine Öffnung (38, 52, 54) im Plattenbauteil ist.

15. Brennstoffzelleneinheit (2, 28) nach einem der Ansprüche 12 bis 14,
**dadurch gekennzeichnet, dass** der Kanal (40) durch eine Prägung zumindest eines Blechs (34) gebildet ist und die Strömungsdrossel (48, 50) eine Öffnung (38, 52, 54) im Blech (34) ist.
